# EUROPÄISCHE PATENTSCHRIFT

(11) **EP 0 812 742 B1**
(45) Veröffentlichungstag und Bekanntmachung des Hinweises auf die Patenterteilung: **21.04.1999**
(21) Anmeldenummer: 97107937.1
(22) Anmeldetag: 15.05.1997
(51) Int. Cl.: B60R 22/44

(54) **Gurtaufroller und Verfahren zu seiner Montage**
Seat belt retractor and method for its assembling
Enrouleur de ceinture de sécurité et son procédé de montage

(30) Priorität: 13.06.1996 DE 19623658
(43) Veröffentlichungstag der Anmeldung: 17.12.1997
(73) Patentinhaber: TRW Occupant Restraint Systems GmbH & Co. KG, 73551 Alfdorf (DE)
(72) Erfinder: Frei, Bernhard, 73550 Waldstetten (DE); Huber, Andreas, 73568 Durlangen (DE)
(74) Vertreter: Kitzhofer, Thomas, Dipl.-Ing.

(56) Entgegenhaltungen:
- US-A- 5 316 233

## Beschreibung

Die Erfindung betrifft einen Federtrieb für eine Gurtspule eines Gurtaufrollers mit einem Gehäuse, in dem die Gurtspule drehbar gelagert ist, wobei der Federtrieb ein mit der Gurtspule drehfest verbundenes Abtriebsteil aufweist, eine Federabdeckung, ein relativ zu der Gurtspule und dem Gehäuse drehbares und konzentrisch mit der Drehachse der Gurtspule angeordnetes Zwischenteil, einen Zapfen, auf dem das Zwischenteil drehbar gelagert ist, eine Aufrollfeder und eine Hilfsfeder. Die Erfindung betrifft weiterhin ein Verfahren zur Montage eines Gurtaufrollers mit einem solchen Federtrieb.

Bei einem Gurtaufroller mit einem solchen Federtrieb, der auch als "Komfort-Aufroller" bezeichnet wird, besteht die Schwierigkeit darin, daß bei der Montage sowohl die Hilfsfeder als auch die stärker als die Hilfsfeder dimensionierte Aufrollfeder vorgespannt sein müssen, wenn die Gurtspule mit dem Federtrieb des Gurtaufrollers verbunden wird.

Ein Federtrieb der eingangs erwähnten Art ist aus der US-A-5 316 233 bekannt. Bei diesem Federtrieb wird die resultierende Federstärke der beiden hintereinandergeschalteten Federn unterschiedlicher Stärke mittels eines Motors eingestellt. Die zum Aufrollen des Gurtes wirksame Kraft wird vergrößert, indem die schwächere Feder mit Hilfe des Motors gespannt wird, und sie wird verkleinert, indem diese Feder wieder entspannt wird.

Durch die Erfindung ist ein Federtrieb geschaffen, der in besonders einfacher Weise vorgespannt werden kann. Zu diesem Zweck ist gemäß der Erfindung bei einem Federtrieb der eingangs genannten Art vorgesehen, daß die Federabdeckung und das Abtriebsteil mit Aufnahmen versehen sind, die mit der Gurtspule koaxial sind und mit Formschlußgestaltungen für den gleichzeitig in beide Aufnahmen drehfest eingesetzten Zapfen versehen sind, daß die Aufrollfeder zwischen dem Gehäuse und dem Zwischenteil wirksam ist und daß die Hilfsfeder zwischen dem Zwischenteil und dem Abtriebsteil wirksam ist.

Durch die Erfindung ist weiterhin ein Verfahren geschaffen, mit dem der Federtrieb des Gurtaufrollers mit minimalem Aufwand vorgespannt werden kann. Zu diesem Zweck ist bei einem erfindungsgemäßen Verfahren zum Montieren eines Federtriebs eines Gurtaufrollers mit einem Gehäuse, einer in diesem drehbar gelagerten Gurtspule und dem Federtrieb für die Gurtspule, der ein mit der Gurtspule drehfest verbundenes Abtriebsteil aufweist, eine Federabdeckung, ein relativ zu der Gurtspule und dem Gehäuse drehbares und konzentrisch mit der Drehachse der Gurtspule angeordnetes Zwischenteil, eine zwischen dem Gehäuse und dem Zwischenteil wirksame Aufrollfeder und eine zwischen dem Zwischenteil und dem Abtriebsteil wirksame Hilfsfeder, vorgesehen, daß der gesamte Federtrieb des Gurtaufrollers getrennt von diesem vormontiert wird, wobei:
a) ein Zapfen in das Abtriebsteil des Federtriebs eingeschoben wird,
b) dann der Zapfen gedreht wird, bis die Hilfsfeder und die Aufrollfeder des Federtriebs vorgespannt sind,
c) der Zapfen weiter in den Federtrieb hineingeschoben wird, bis er in eine Aufnahme in der Federabdeckung so eingreift, daß das Abtriebsteil relativ zu der Federabdeckung drehfest gehalten ist,
   und daß dann der Federtrieb an dem Gurtaufroller montiert wird, wobei der Zapfen aus dem Abtriebsteil heraus- und weiter in die
Aufnahme in der Federabdeckung hineingedrückt wird, während gleichzeitig die Gurtspule mit dem Abtriebsteil des Federtriebs verbunden wird.

Der während des Vormontierens des Federtriebs in diesen eingeschobene Zapfen erfüllt also gleichzeitig drei Funktionen: er dient als Spannwerkzeug für den Federtrieb, er dient bei vorgespanntem Federtrieb als Fixierungselement, welches das Abtriebsteil relativ zu der Federabdeckung drehfest hält, und er dient schließlich als Lagerelement für das Zwischenteil, wenn er vollständig in seine Aufnahme der Federabdeckung eingeschoben ist. Somit ergibt sich insgesamt eine besonders einfache Montage eines Gurtaufrollers mit einem erfindungsgemäßen Federtrieb.

Bei einer bevorzugten Ausführungsform eines erfindungsgemäßen Federtriebs ist vorgesehen, daß der Zapfen an seinem in die Aufnahme der Federabdeckung eingesetzten Ende mit einer Umfangsnut versehen ist und daß die Aufnahmen des Abtriebsteils und der Federabdeckung mit einem nach innen hervorstehenden Wulst versehen sind. Weiterhin kann vorgesehen sein, daß der Abstand zwischen dem Wulst der Aufnahme des Abtriebsteils und der dem Zwischenteil zugewandten Stirnseite des Abtriebsteils dem Abstand zwischen der Umfangsnut des Zapfens und der Stirnseite an dem genannten Ende des Zapfens entspricht. Außerdem kann vorgesehen sein, daß der Abstand zwischen dem Wulst der Aufnahme des Abtriebsteils und dem Wulst der Aufnahme der Federabdeckung der Länge des Zapfens entspricht. Schließlich kann vorgesehen sein, daß der Abstand zwischen dem Wulst der Aufnahme der Federabdeckung und der der Gurtspule zugewandten Stirnseite des Zwischenteils dem Abstand zwischen der Umfangsnut des Zapfens und der Stirnseite am zweiten Ende des Zapfens entspricht. Bei einer solchen Gestaltung werden mit minimalem Aufwand die verschiedenen Stellungen des Zapfens relativ zu dem Federtrieb vorgegeben, die für ein ordnungsgemäßes Spannen des Federtriebs und ein anschließendes Montieren des Federtriebs an dem Gurtaufroller notwendig sind: Eine Spannstellung mit vollständig in die Aufnahme in dem Abtriebsteil eingeschobenem Zapfen, eine Montagezwischenstellung, in der der Zapfen sowohl in die Aufnahme in dem Abtriebsteil als auch in die Aufnahme in der Federabdeckung eingreift und diese beiden Teile relativ zueinander drehfest halt, so daß die Hilfsfeder und die Aufrollfeder gespannt bleiben, und eine Funktionsstellung, in der der Zapfen von dem Abtriebsteil getrennt ist, so daß die Hilfsfeder und die Aufrollfeder über das Abtriebsteil auf die mit diesem verbundene Gurtspule einwirken können.

Vorzugsweise ist der Zapfen einstückig mit dem Abtriebsteil spritzgegossen, wobei die Materialverbindung zwischen dem Zapfen und dem Abtriebsteil zerbrochen wird, wenn der Zapfen in das Abtriebsteil eingeschoben wird. Durch diese Gestaltung wird das Vorspannen des Federtriebs weiter vereinfacht.

Weitere vorteilhafte Ausgestaltungen eines erfindungsgemäßen Federtriebs ergeben sich aus den Unteransprüchen.

Einzelheiten der Erfindung ergeben sich aus der nachfolgenden Beschreibung einer bevorzugten Ausführungsform, die in der Zeichnung dargestellt ist. In dieser zeigen:
- Fig. 1 schematisch einen erfindungsgemäßen Federtrieb eines Gurtaufrollers im Ausgangszustand;
- Fig. 2 den Federtrieb von Figur 1 in einer Spannstellung;
- Fig. 3 den Federtrieb von Figur 1 in einer Montagezwischenstellung; und
- Fig. 4 den Federtrieb von Figur 1 in einer Funktionsstellung.

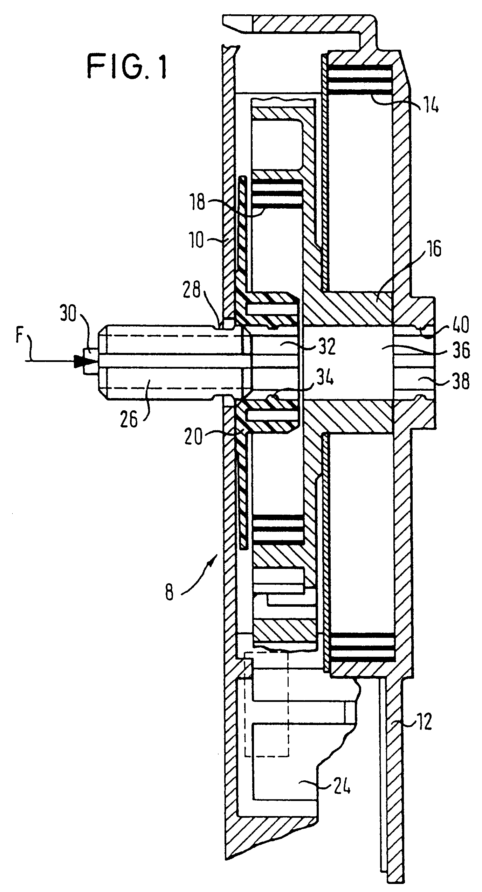

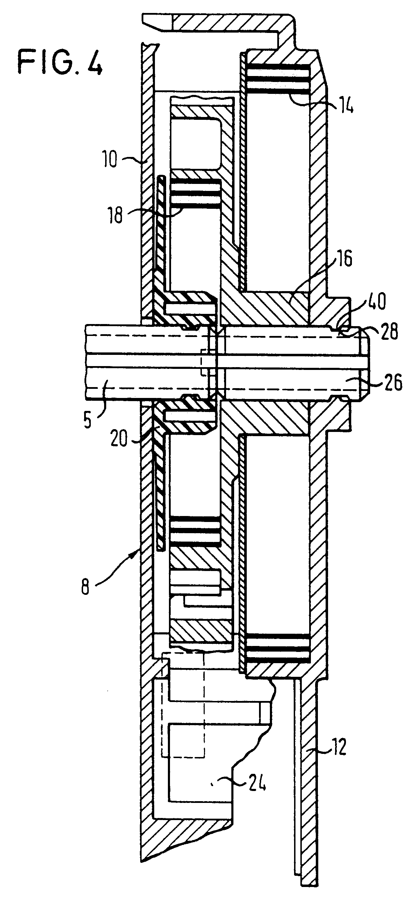

In den Figuren 1 bis 4 ist eine bevorzugte Ausführungsform eines erfindungsgemäßen Federtriebs, der bei einem Gurtaufroller verwendet wird. Der Gurtaufroller besteht im wesentlichen aus einem Gehäuse, in dem eine Gurtspule drehbar gelagert ist, und einem Sperrmechanismus, mit dem die Gurtspule fahrzeug- und/oder gurtbandsensitiv blockiert werden kann. Im Sinne einer übersichtlichen Darstellung ist von diesem Gurtaufroller lediglich in Fig. 4 ein fest mit der Gurtspule verbundener Antriebsfortsatz 5 dargestellt. Der Gurtaufroller weist weiterhin einen Federtrieb 8 auf, der die Gurtspule des Gurtaufrollers über den Antriebsfortsatz 5 in der Gurtbandaufwickelrichtung beaufschlagt.

Der Federtrieb 8 weist eine Halteplatte 10 und eine Federabdeckung 12 auf, in deren Innerem eine Aufrollfeder 14, ein relativ zu der Gurtspule und dem Gehäuse 10 drehbares und konzentrisch mit der Drehachse der Gurtspule angeordnetes Zwischenteil 16, eine Hilfsfeder 18 und ein Abtriebsteil 20 angeordnet sind, das drehfest mit dem in Figur 4 dargestellten Antriebsfortsatz 5 der Gurtspule verbunden ist. Das äußere Ende der Aufrollfeder 14 ist an der Federabdeckung 12 festgelegt, während das innere Ende der Aufrollfeder 14 an dem Zwischenteil 16 festgelegt ist. Das äußere Ende der Hilfsfeder 18 ist wiederum an dem Zwischenteil 16 festgelegt, während das innere Ende der Hilfsfeder an dem Abtriebsteil 20 festgelegt ist. Mit einem solchen Federtrieb kann eine "Komfort-Funktion" verwirklicht werden, bei der bei angelegtem Gurtband die auf die Gurtspule wirkende Aufwickelkraft für das Gurtband vermindert ist. Zu diesem Zweck kann das Zwischenteil mittels einer schematisch dargestellten Blockiereinrichtung 24 blockiert werden, so daß nur noch die Kraft der schwächer als die Aufrollfeder dimensionierten Hilfsfeder auf die Gurtspule einwirkt. Ein solcher Gurtaufroller ist bekannt. Nachfolgend werden lediglich die Gestaltung und die Montage eines Federtriebs für einen bzw. an einem solchen Gurtaufroller beschrieben.

In Figur 1 ist der Ausgangszustand eines solchen Federtriebs 8 dargestellt. Einstückig an das Abtriebsteil 20 ist ein Zapfen 26 angespritzt, der mit einem Keilwellenprofil versehen ist. An seinem bezüglich der Figuren rechten Ende ist der Zapfen 26 mit einer Umfangsnut 28 versehen, und an der Stirnseite seines zu dem genannten Ende entgegengesetzten zweiten Endes ist er mit einem Lagervorsprung 30 versehen. Das Abtriebsteil 20 weist eine Aufnahme 32 für den Zapfen 26 auf, die mit der Drehachse der Gurtspule konzentrisch ist und mit einem zum Keilwellenprofil des Zapfens 26 komplementären Keilnabenprofil versehen ist. Im Inneren der Aufnahme 32 ist ein nach innen hervorstehender Wulst 34 gebildet. Auch die Federabdeckung 12 ist mit einer mit der Drehachse der Gurtspule konzentrischen Aufnahme 38 versehen, die in gleicher Weise wie die Aufnahme 32 des Abtriebsteils mit einem zum Keilwellenprofil des Zapfens 26 komplementären Keilnabenprofil versehen ist und einen nach innen hervorstehenden Wulst 40 aufweist. Das Zwischenteil 16 ist mit einer mit der Drehachse der Gurtspule konzentrischen Bohrung 36 versehen, die eine glatte Innenfläche hat und einen Durchmesser aufweist, der geringfügig größer als der Außendurchmesser des Zapfens 26 ist.

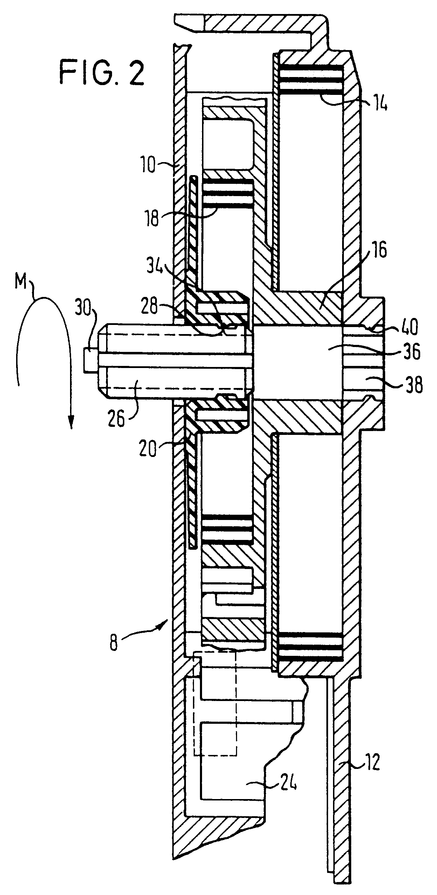

Aufgrund der beschriebenen Gestaltung ist der Federtrieb 8 unabhängig von der Gurtspule für sich allein vormontierbar. Zuerst wird der an das Abtriebsteil 20 angespritzte Zapfen 26 von dem Abtriebsteil gelöst. Zu diesem Zweck wird auf den Zapfen 26 eine entlang des Pfeils F gerichtete Kraft ausgeübt, mit der die dünnwandigen Spritzgußübergänge zwischen dem Abthebsteil 20 und dem Zapfen 26 zerbrochen werden. Der Zapfen 26 wird dann bis in die in Figur 2 dargestellte Spannstellung in das Abtriebsteil 20 hineingedrückt. In dieser Spannstellung wird der Zapfen 26 von dem in die Umfangsnut 28 eingreifenden Wulst 34 fixiert. Durch ein auf den nun als Spannwerkzeug dienenden Zapfen 26 aufgebrachtes Moment M werden die Hilfsfeder 18 und die Aufrollfeder 14 im gewünschten Maße vorgespannt. Der Blockiermechanismus 24 ist beim Spannen der Aufrollfeder 14 und der Hilfsfeder 18 desaktiviert.

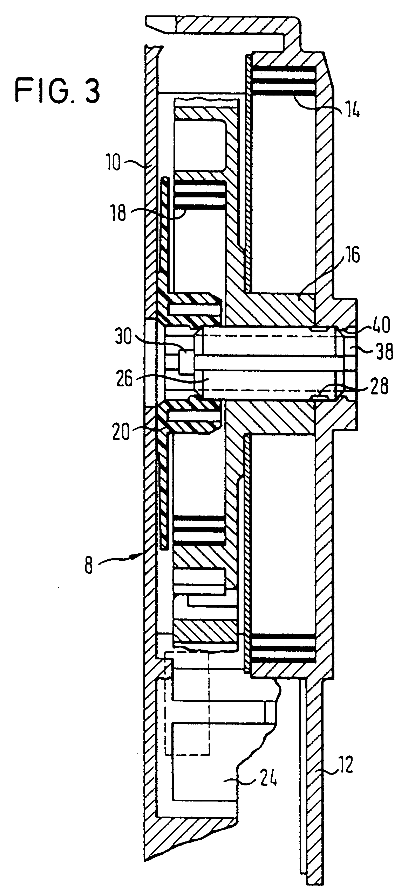

Wenn die gewünschte Vorspannung der Hilfsfeder 18 und der Aufrollfeder 14 erreicht ist, wird der Zapfen 26 weiter in Richtung des Pfeils F in den Federtrieb hineingedrückt, bis der Zapfen 26 in die Aufnahme 38 der Federabdeckung 12 eingreift. Gleichzeitig ist der Zapfen 26 weiterhin drehfest mit dem Abtriebsteil 20 verbunden (Fig. 3). In dieser Montagezwischenstellung ist der Zapfen 26 zwischen dem Wulst 34 der Aufnahme 32 des Abtriebsteils und dem Wust 40 der Aufnahme 38 des Federteils 12 fixiert. Aufgrund der drehfesten Verbindung zwischen dem Zapfen 26 und den Aufnahmen 32, 38 ist das Abtriebsteil 20 relativ zur Federabdeckung 12 drehfest gehalten, und die Hilfsfeder 18 und die Aufrollfeder 14 verbleiben vorgespannt. Der Federtrieb ist nun vollständig vormontiert.

Wenn der so vormontierte Federtrieb an einem Gurtaufroller montiert wird, wird das Abtriebsteil 20 auf den Antriebsfortsatz 5 der Gurtspule aufgeschoben. Der Antriebsfortsatz 5 drückt den Zapfen 26 weiter in den Federtrieb hinein, bis er die Aufnahme 32 des Abtriebsteils 20 verläßt und im wesentlichen bündig mit der der Gurtspule zugewandten Stirnseite des Zwischenteils 16 abschließt (Fig. 4). In dieser Funktionsstellung ist das Abtriebsteil 20 drehfest mit der Gurtspule verbunden, und es kann sich relativ zu der Federabdeckung 12 frei drehen. Der Zapfen 26 dient in dieser Funktionsstellung des Federtriebs lediglich zur Lagerung des Zwischenteils 16 und zum Abschließen des Federtriebs nach außen, da die von der Aufnahme 38 gebildete Öffnung in der Federabdeckung 12 durch den eingesetzten Zapfen 26 fest verschlossen ist. In dieser Stellung wird der Zapfen 26 durch den in seine Umfangsnut 28 eingreifenden Wulst 40 gehalten. Durch ein Eingreifen seines Lagervorsprungs 30 in eine entsprechende Lagerausnehmung des Antriebsfortsatzes 5 ist der Zapfen 26 beidseitig gelagert.

Die Erfindung beruht also darauf, daß der Zapfen 26 verschiedene Funktionen gleichzeitig erfüllt, nämlich die Funktion eines Spannwerkzeugs zum Spannen der Hilfsfeder 18 und der Aufrollfeder 14, die Funktion eines Fixierungselementes zum Halten der Hilfsfeder 18 und der Aufrollfeder 14 im vorgespannten Zustand und die Funktion eines Lagerelementes für das Zwischenelement. Weiterhin erfüllt der Zapfen 26 die Funktion eines Verschlußelementes für die Federabdeckung 16. Hervorzuheben ist, daß die verschiedenen Funktionen des Zapfens und die diesen Funktionen zugeordneten Stellungen des Zapfens im Inneren des Federtriebs durch die besondere Bemessung des Zapfens und die besondere Anordnung der Umfangsnut des Zapfens und der Wülste der Aufnahmen des Abtriebsteils und der Federabdeckung unterstützt werden.

## Patentansprüche

1. Federtrieb für eine Gurtspule eines Gurtaufrollers mit einem Gehäuse, in dem die Gurtspule drehbar gelagert ist, wobei der Federtrieb (8) ein mit der Gurtspule drehfest verbundenes Abtriebsteil (20) aufweist sowie eine Federabdeckung (12), ein relativ zu der Gurtspule und dem Gehäuse drehbares und konzentrisch mit der Drehachse der Gurtspule angeordnetes Zwischenteil (16), einen Zapfen (26), auf dem das Zwischenteil (16) drehbar gelagert ist, eine Aufrollfeder (14) und eine Hilfsfeder (18),
dadurch gekennzeichnet,
daß die Federabdeckung (12) und das Abtriebsteil (20) mit Aufnahmen (32, 38) versehen sind, die mit der Gurtspule koaxial sind und mit Formschlußgestaltungen für den gleichzeitig in beide Aufnahmen (32, 38) drehfest eingesetzten Zapfen (26) versehen sind, daß die Aufrollfeder (14) zwischen dem Gehäuse und dem Zwischenteil (16) wirksam ist und daß die Hilfsfeder (18) zwischen dem Zwischenteil (16) und dem Abtriebsteil (20) wirksam ist.

2. Federtrieb nach Anspruch 1, dadurch gekennzeichnet, daß der Zapfen (26) mit einem Keilwellenprofil versehen ist und daß die Aufnahmen (32, 38) der Federabdeckung (12) und des Abtriebsteils (20) mit einem zu dem Keilwellenprofil komplementären Keilnabenprofil versehen sind.

3. Federtrieb nach einem der vorhergehenden Ansprüche, dadurch gekennzeichnet, daß der Zapfen (26) an seinem in die Aufnahme (38) der Federabdeckung (12) eingesetzten Ende mit einer Umfangsnut (28) versehen ist und daß die Aufnahmen (32, 38) des Abtriebsteils (20) und der Federabdeckung (12) mit einem nach innen hervorstehenden Wulst (34, 40) versehen sind.

4. Federtrieb nach Anspruch 3, dadurch gekennzeichnet, daß der Abstand zwischen dem Wulst (34) der Aufnahme (32) des Abtriebsteils (26) und der dem Zwischenteil (16) zugewandten Stirnseite des Abtriebsteils (26) dem Abstand zwischen der Umfangsnut (28) des Zapfens (26) und der Stirnseite an dem genannten Ende des Zapfens entspricht.

5. Federtrieb nach einem der Ansprüche 3 und 4, dadurch gekennzeichnet, daß der Abstand zwischen dem Wulst (34) der Aufnahme (32) des Abtriebsteils (20) und dem Wulst (40) der Aufnahme (38) der Federabdeckung (12) der Länge des Zapfens (26) entspricht.

6. Federtrieb nach einem der Ansprüche 3 bis 5, dadurch gekennzeichnet, daß der Abstand zwischen dem Wulst (40) der Aufnahme (38) der Federabdeckung (12) und der der Gurtspule zugewandten Stirnseite des Zwischenteils (16) dem Abstand zwischen der Umfangsnut (28) des Zapfens (26) und der Stirnseite am zweiten Ende des Zapfens entspricht.

7. Federtrieb nach einem der vorhergehenden Ansprüche, dadurch gekennzeichnet, daß das zweite Ende des Zapfens (26) mit einem sich in axialer Richtung erstreckenden Lagervorsprung (30) versehen ist und daß das dem Zapfen (26) zugewandte und in die Aufnahme (32) des Abtriebsteils (20) eingesetzte Ende der Gurtspule mit einer komplementären Lagerausnehmung versehen ist.

8. Federtrieb nach einem der vorhergehenden Ansprüche, dadurch gekennzeichnet, daß die Aufnahme (38) der Federabdeckung (12) nach außen geöffnet ist.

9. Verfahren zur Montage eines Federtriebs eines Gurtaufrollers mit einem Gehäuse, einer in diesem drehbar gelagerten Gurtspule und dem Federtrieb (8) für die Gurtspule, der ein mit der Gurtspule drehfest verbundenes Abtriebsteil (20) aufweist, eine Federabdeckung (12), ein relativ zu der Gurtspule und dem Gehäuse drehbares und konzentrisch mit der Drehachse der Gurtspule angeordnetes Zwischenteil (16), eine zwischen dem Gehäuse und dem Zwischenteil (16) wirksame Aufrollfeder (14) und eine zwischen dem Zwischenteil (16) und dem Abtriebsteil (20) wirksame Hilfsfeder (18),
bei dem
der gesamte Federtrieb (8) des Gurtaufrollers getrennt von diesem vormontiert wird, wobei:
a) ein Zapfen (26) in das Abtriebsteil (20) des Federtriebs (8) eingeschoben wird,
b) dann der Zapfen (26) gedreht wird, bis die Hilfsfeder (18) und die Aufrollfeder (14) des Federtriebs (8) vorgespannt sind,
c) der Zapfen (26) weiter in den Federtrieb (8) hineingeschoben wird, bis er in eine Aufnahme (38) in der Federabdeckung (12) so eingreift, daß das Abtriebsteil (20) relativ zu der Federabdeckung (12) drehfest gehalten ist,
und bei dem dann der Federtrieb (8) an dem Gurtaufroller montiert wird, wobei der Zapfen (26) aus dem Abtriebsteil (20) heraus- und weiter in die Aufnahme (38) in der Federabdeckung (12) hineingedrückt wird, während gleichzeitig die Gurtspule mit dem Abtriebsteil (20) des Federtriebs (8) verbunden wird.

10. Verfahren nach Anspruch 9, dadurch gekennzeichnet, daß der Zapfen (26) einstückig mit dem Abtriebsteil (20) spritzgegossen ist, und daß vor dem Einschieben des Zapfens (26) in das Abtriebsteil (20) gemäß Schritt a) die Materialverbindung zwischen dem Zapfen (26) und dem Abtriebsteil (20) zerbrochen wird.

## Claims

1. A spring drive for a belt drum of a belt retractor comprising a housing in which the belt drum is rotatably mounted, the spring drive (8) having an output drive part (20) connected with the belt drum in such a manner as to prevent relative rotation, a spring cover (12), an intermediate part (16) which is rotatable in relation to the belt drum and the housing and is centered on the axis of rotation of the belt drum, a pin (26) on which the intermediate part (16) is rotatably mounted, a wind-up spring (14), and an auxiliary spring (18),
characterized in that
the spring cover (12) and the output drive part (20) are provided with receiving means (32, 38) which are coaxial to the belt drum and are provided with interlocking means for the pin (26) which is simultaneously inserted into both receiving means (32, 38) in such a manner as to prevent relative rotation, that the wind-up spring (14) is effective between the housing and the intermediate part (16), and that the auxiliary spring (18) is effective between the intermediate part (16) and the output drive part (20).

2. The spring drive as claimed in claim 1, characterized in that the pin (26) is formed as a splined shaft and that the receiving means (32, 38) of the spring cover (12) and of the output drive part (20) are provided with a splined outline complementary to the splines of the pin.

3. The spring drive as claimed in either of the preceding claims, characterized in that the pin (26) is provided with a peripheral groove (28) on its end inserted into the receiving means (38) in the spring cover (12), and that the receiving means (32, 38) in the output drive part (20) and in the spring cover (12) are provided with an inwardly projecting bead (34, 40).

4. The spring drive as claimed in claim 3, characterized in that the distance between the bead (34) in the receiving means (32) in the output drive part (20) and the end face, facing the intermediate part (16), of the output drive part (20) is the same as the distance between the peripheral groove (28) in the pin (26) and the end face at said end of the pin.

5. The spring drive as claimed in either of claims 3 and 4, characterized in that the distance between the bead (34) in the receiving means (32) in the output drive part (20) and the bead (40) in the receiving means (38) in the spring cover (12) is the same as the length of the pin (26).

6. The spring drive as claimed in any of claims 3 to 5, characterized in that the distance between the bead (40) in the receiving means (38) in the spring cover (12) and the end face, facing the belt drum, of the intermediate part (16) is the same as the distance between the peripheral groove (28) in the pin (26) and the end face at the second end of the pin.

7. The spring drive as claimed in any of the preceding claims, characterized in that the second end of the pin (26) is provided with a bearing head (30) extending in the axial direction and that the end of the belt drum facing the pin (26) and inserted into the receiving means (32) of the output drive part (20) is provided with a complementary bearing recess.

8. The spring drive as claimed in any of the preceding claims, characterized in that the receiving means (38) in the spring cover (12) is open to the outside.

9. A method for the assembly of a spring drive of a belt retractor comprising a housing, a belt drum rotatably mounted in the housing, and the spring drive (8) for the belt drum, the spring drive (8) having an output drive part (20) connected with the belt drum in such a manner as to prevent relative rotation, a spring cover (12), an intermediate part (16) which is rotatable in relation to the belt drum and the housing and is centered on the axis of rotation of the belt drum, a wind-up spring (14) effective between the housing and the intermediate part (16), and an auxiliary spring (18) effective between the intermediate part (16) and the output drive part (20),
wherein
the entire spring drive (8) of the belt retractor is pre-assembled separately from the latter, comprising the following steps:
(a) a pin (26) is inserted into the output drive part (20) of the spring drive (8),
(b) then the pin (26) is rotated until the auxiliary spring (18) and the wind-up spring (14) of the spring drive (8) are pre-tensioned,
(c) the pin (26) is inserted further into the spring drive (8) until it so fits into a receiving means (38) in the spring cover (12) that the output drive part (20) is held in such a manner as to prevent rotation in relation to the spring cover (12),
and wherein the spring drive (8) is then mounted on the belt retractor, the pin (26) being thrust out of the output drive part (20) and further into the receiving means (38) in the spring cover (12), while simultaneously the belt drum is connected with the output drive part (20) of the spring drive (8).

10. The method as claimed in claim 9, characterized in that the pin (26) is injection-moulded integrally with the output drive part (20) and that prior to insertion of the pin (26) into the output drive part (20) in accordance with step (a) the material connection between the pin (26) and the output drive part (20) is broken.

## Revendications

1. Mécanisme d'entraînement à ressort pour une bobine d'un enrouleur de ceinture avec un boîtier dans lequel la bobine de ceinture est montée de façon à pouvoir tourner, le mécanisme d'entraînement à ressort (8) présentant une prise de sortie (20), reliée de façon solidaire en rotation à la bobine de la ceinture ainsi qu'un recouvrement du ressort (12), une pièce intermédiaire (16), qui est disposée de façon à pouvoir tourner par rapport à la bobine de la ceinture et au boîtier, et de façon concentrique à l'axe de rotation de la bobine de la ceinture, un tenon (26), sur lequel est montée de façon à pouvoir tourner la pièce intermédiaire (16), un ressort d'enroulement (14) et un ressort auxiliaire (18), caractérisé en ce que le recouvrement du ressort (12) et la prise de sortie (20) sont pourvus de logements (32, 38), qui sont coaxiaux à la bobine de la ceinture et sont pourvus de configurations à complémentarité de forme pour le tenon (26) qui est inséré en même temps de façon solidaire en rotation dans les deux logements (32, 38), en ce que le ressort d'enroulement (14) est opérationnel entre le boîtier et la pièce intermédiaire (16) et en ce que le ressort auxiliaire (18) est opérationnel entre la pièce intermédiaire (16) et la prise de sortie (20).

2. Mécanisme d'entraînement à ressort selon la revendication 1, caractérisé en ce que le tenon (26) est pourvu d'un profil cannelé d'arbre et en ce que les logements (32, 38) du recouvrement du ressort (12) et de la prise de sortie (20) sont pourvus d'un profil cannelé complémentaire du profil cannelé d'arbre.

3. Mécanisme d'entraînement à ressort selon l'une des revendications précédentes, caractérisé en ce que le tenon (26) est pourvu à son extrémité insérée dans le logement (38) du recouvrement du ressort (12) d'une rainure périphérique (28) et en ce que les logements (32, 38) de la prise de sortie (20) et du recouvrement de ressort (12) sont pourvus d'un bourrelet (34, 40) qui fait saillie vers l'intérieur.

4. Mécanisme d'entraînement à ressort selon la revendication 3, caractérisé en ce que la distance entre le bourrelet (34) du logement (32) de la prise de sortie (20) et le côté frontal de la prise de sortie (20), qui est tourné vers la pièce intermédiaire (16), correspond à la distance comprise entre la rainure périphérique (28) du tenon (26) et le côté frontal à ladite extrémité du tenon.

5. Mécanisme d'entraînement à ressort selon l'une des revendications 3 et 4, caractérisé en ce que la distance entre le bourrelet (34) du logement (32) de la prise de sortie (20) et le bourrelet (40) du logement (38) du recouvrement du ressort (12) correspond à la longueur du tenon (26).

6. Mécanisme d'entraînement à ressort selon l'une des revendications 3 à 5, caractérisé en ce que la distance entre le bourrelet (40) du logement (38) du recouvrement du ressort (12) et le côté frontal de la pièce intermédiaire (16) qui est tourné vers la bobine de la ceinture correspond à la distance comprise entre la rainure périphérique (28) du tenon (26) et le côté frontal à la deuxième extrémité du tenon.

7. Mécanisme d'entraînement à ressort selon l'une des revendications précédentes, caractérisé en ce que la deuxième extrémité du tenon (26) est pourvue d'une saillie de montage (30) qui s'étend dans le sens axial et en ce que l'extrémité de la bobine de la ceinture, qui est tournée vers le tenon (26) et qui est insérée dans le logement (32) de la prise de sortie (20), est pourvue d'un évidement de montage complémentaire.

8. Mécanisme d'entraînement à ressort selon l'une des revendications précédentes, caractérisé en ce que le logement (38) du recouvrement de ressort (12) est ouvert vers l'extérieur.

9. Procédé de montage d'un mécanisme d'entraînement à ressort d'un enrouleur de ceinture avec un boîtier, avec une bobine de ceinture montée de façon à pouvoir tourner dans celui-ci, et avec le mécanisme d'entraînement à ressort (8) de la bobine de la ceinture, mécanisme qui présente une prise de sortie (20) reliée de façon solidaire en rotation à la bobine de la ceinture, un recouvrement du ressort (12), une pièce intermédiaire (16) disposée de façon à pouvoir tourner par rapport à la bobine de la ceinture et au boîtier et de façon concentrique à l'axe de rotation de la bobine de la ceinture, un ressort d'enroulement (14) opérationnel entre le boîtier et la pièce intermédiaire (16) et un ressort auxiliaire opérationnel entre la pièce intermédiaire (16) et la prise de sortie (20), procédé dans lequel l'ensemble du mécanisme d'entraînement à ressort (8) de l'enrouleur de ceinture est monté au préalable de façon séparée de celui-ci,:
a) un tenon (26) étant enfoncé dans la prise de sortie (20) du mécanisme d'entraînement à ressort (8)
b) le tenon (26) étant ensuite tourné jusqu'à ce que le ressort auxiliaire (18) et le ressort d'enroulement (14) du mécanisme d'entraînement à ressort (8) soient précontraints,
c) le tenon (26) continuant d'être enfoncé dans le mécanisme d'entraînement à ressort (8), jusqu'à ce qu'il vienne en prise dans un logement (38) dans le recouvrement du ressort (12) de telle sorte que la prise de sortie (20) soit maintenue de façon solidaire en rotation par rapport au recouvrement du ressort (12).
et procédé dans lequel ensuite le mécanisme d'entraînement à ressort (8) est monté sur l'enrouleur de ceinture, le tenon (26) étant sorti de la prise de sortie (20) et davantage enfoncé dans le logement (38) dans le recouvrement du ressort (12), tandis qu'en même temps la bobine de la ceinture est reliée à la prise de sortie (20) du mécanisme d'entraînement à ressort (8).

10. Procédé selon la revendication 9, caractérisé en ce que le tenon (26) est coulé par injection d'un seul tenant avec la prise de sortie (20) et en ce que avant l'enfoncement du tenon (26) dans la prise de sortie (20) selon la séquence a) on brise la liaison de matière entre le tenon (26) et la prise de sortie (20).
